# EUROPEAN PATENT APPLICATION

(11) **EP 3 742 697 A1**
(43) Date of publication of application: **25.11.2020**
(21) Application number: 19856465.0
(22) Date of filing: 08.05.2019
(51) Int. Cl.: H04L 29/06, H04L 29/08

(54) **DATA TRANSMISSION SCHEDULING METHOD AND SYSTEM**

(30) Priority: 09.04.2019 CN 201910281603
(71) Applicant: Wangsu Science & Technology Co., Ltd., Shanghai 200030 (CN)
(72) Inventor: WANG, Kaipeng, Shangai 200030 (CN)
(74) Representative: Vinsome, Rex Martin
(86) International application number: PCT/CN2019/086052
(87) International publication number: WO 2020/206783

(57) **Abstract**

Some embodiments of the present application disclose a data transmission scheduling method and system, and the method relates to the field of data transmission technologies and comprises: the scheduling server periodically acquiring data production status of all online data producers during a previous period and data consumption status of all online data consumers during the previous period (201); the scheduling server generating a transmission schedule table according to infrastructure information of all online data producers and all online data consumers as well as data production status and data consumption status (202); the scheduling server providing the transmission schedule table to all online data producers, such that all online data producers perform data transmission based on the transmission schedule table (203). With embodiments of the present application, effective load balancing may be implemented in a data consumption cluster, and data processing quality and device resource utilization rate of the data consumption cluster may be further improved.

## Description

### CROSS REFERENCE TO RELATED APPLICATIONS

This application claims priority of Chinese Patent Application No. 201910281603.6, filed on April 9, 2019, entitled "DATA TRANSMISSION SCHEDULING METHOD AND SYSTEM", the disclosure of which is incorporated by reference in its entirety.

### TECHNICAL FIELD

The present application relates to the field of data transmission technologies, and in particular, to a data transmission scheduling method and a data transmission scheduling system.

### BACKGROUND

With the rapid development of network technologies and data processing technologies, business scale of business service cluster (which may be referred to as data production cluster), such as CDN cluster and cloud service cluster, is continuously expanding, and service capability is continuously increasing. To ensure the quality of business service, a service provider generally collects and analyzes data generated by business server in the business service cluster, through a data analysis cluster (which may be referred to as a data consumption cluster), so as to adjust operation state of the business server based on the analysis result.

Due to the huge amount of data that needs to be collected and analyzed, there are generally a large number of data analysis devices (which may be referred to as data consumers) in a data analysis system, and each business server (which may be referred to as data producer) may transmit data to a pre-designated data analysis device for analysis after the data is generated. For example, there are three data analysis devices A, B, and C in the data analysis system, and there are 30 business servers in a network service system, in such case, the 1st-10th business servers may be set to transmit the generated data to the data analysis device A for analysis, the 11th-20th business servers may be set to transmit the generated data to the data analysis device B for analysis, and the 21st-30th business servers may be set to transmit the generated data to the data analysis device C for analysis.

In the process of implementing the present application, the inventor found that there are at least the following problems in the prior art:

Due to the difference between processing capabilities of data analysis devices and the amount of data to be analyzed, the load of each data analysis device is also different. Under the above data transmission mechanism, there will be a case in which some data analysis devices will be overloaded continuously while other data analysis devices will be in idle for a long period of time, so that the data processing quality of the data analysis system will be affected and the utilization rate for device resource of the data analysis system is low.

### SUMMARY

In order to solve the problems of the prior art, some embodiments of the present application provide a data transmission scheduling method and a data transmission scheduling system. The technical solution is as follows:
In a first aspect, a data transmission scheduling method is provided, the method may be applied to a data transmission scheduling system, the data transmission scheduling system comprises at least one scheduling server, a plurality of data producers and data consumers, wherein the method comprises:
periodically acquiring, by the scheduling server, data production status of all online data producers during a previous period and data consumption status of all online data consumers during the previous period;
generating, by the scheduling server, a transmission schedule table according to infrastructure information of all online data producers and all online data consumers as well as the data production status and the data consumption status; and
providing, by the scheduling server, the transmission schedule table to all online data producers, such that all online data producers perform data transmission based on the transmission schedule table.

Optionally, the scheduling server providing the transmission schedule table to all online data producers, such that all online data producers perform data transmission based on the transmission schedule table comprises:
with respect to a target online data producer, sending, by the scheduling server, the transmission schedule table to the target online data producer for storage; and
when target data needs to be transmitted to a data consumer, transmitting, by the target online data producer, the target data according to the stored transmission schedule table.

Optionally, the method further comprises:
caching, by the scheduling server, the transmission schedule table at a server front end;
if scheduling information corresponding to the target data does not exist in the transmission schedule table stored by the target online data producer, sending, by the target online data producer, a data scheduling request to the scheduling server;
looking up target scheduling information corresponding to the target data in the transmission schedule table cached at the server front end and feeding back the target scheduling information to the data producer, by the scheduling server; and
transmitting, by the target online data producer, the target data according to the target scheduling information.

Optionally, the method further comprises performing the following step after the target online data producer sending a data scheduling request to the scheduling server:
if the scheduling information corresponding to the target data does not exist in the transmission schedule table cached at the server front end, generating target scheduling information corresponding to the target data based on the infrastructure information of the target online data producer and feeding back the target scheduling information to the target online data producer, by the scheduling server.

Optionally, providing, by the scheduling server, the transmission schedule table to all online data producers, such that all online data producers perform data transmission based on the transmission schedule table comprises:
caching, by the scheduling server, the transmission schedule table at a server front end;
with respect to any one of the online data producers, sending, by the online data producer, a data scheduling request to the scheduling server, when target data needs to be transmitted to a data consumer;
looking up target scheduling information corresponding to the target data in the transmission schedule table cached at the server front end and feeding back the target scheduling information to the online data producer, by the scheduling server; and
transmitting, by the online data producer, the target data according to the target scheduling information.

Optionally, the method further comprises:
when receiving a registration request or a re-online request for a target data producer, acquiring, by the scheduling server, infrastructure information of the target data producer; and
marking the target data producer as an online data producer and allocating online data consumers during a current period to the target data producer based on the infrastructure information of the target online data producer, by the scheduling server.

Optionally, the method further comprises:
when a logout request or a sleep request for a target data producer is received, or when a keep-alive message is not received from the target data producer within a preset duration, marking, by the scheduling server, a target data producer as a non-online data producer.

Optionally, the method further comprises:
when receiving a registration request or a re-online request for a target data consumer, acquiring infrastructure information of the target data consumer and marking the target data consumer as an online data consumer, by the scheduling server;
generating, by the scheduling server, a latest transmission schedule table, according to the infrastructure information of all online data producers and the data production status during the previous period as well as the infrastructure information of all online data consumers and the data consumption status during the previous period; and
providing, by the scheduling server, the latest transmission schedule table to all online data producers, such that all online data producers perform data transmission based on the latest transmission schedule table.

Optionally, the method further comprises:
when a logout request or a sleep request for a target data consumer is received, or when a keep-alive message is not received from the target data consumer within a preset duration, marking, by the scheduling server, the target data consumer as a non-online data consumer ;
generating, by the scheduling server, a latest transmission schedule table, according to the infrastructure information of all online data producers and the data production status during the previous period as well as the infrastructure information of all online data consumers and the data consumption status during the previous period; and
providing, by the scheduling server, the latest transmission schedule table to all online data producers, such that all online data producers perform data transmission based on the latest transmission schedule table.

In a second aspect, a data transmission scheduling system is provided, the system comprises at least one scheduling server, a plurality of data producers and data consumers, wherein the scheduling server is configured to:
periodically acquire data production status of all online data producers during a previous period and data consumption status of all online data consumers during the previous period;
generate a transmission schedule table according to infrastructure information of all online data producers and all online data consumers as well as the data production status and the data consumption status; and
provide the transmission schedule table to all online data producers, such that all online data producers perform data transmission based on the transmission schedule table.

Optionally, the scheduling server is specifically configured to send the transmission schedule table to a target online data producer for storage; and
the target online data producer is configured to transmit target data according to the stored transmission schedule table, when the target data needs to be transmitted to a data consumer.

Optionally, the scheduling server is further configured to cache the transmission schedule table at a server front end;
the target online data producer is further configured to send a data scheduling request to the scheduling server, if scheduling information corresponding to the target data does not exist in the transmission schedule table stored by the target online data producer;
the scheduling server is further configured to look up target scheduling information corresponding to the target data in the transmission scheduling table cached at the server front end, and feed back the target scheduling information to the data producer; and
the target online data producer is further configured to transmit the target data according to the target scheduling information.

Optionally, the scheduling server is further configured to:
generate target scheduling information corresponding to the target data based on the infrastructure information of the target online data producer if the scheduling information corresponding to the target data does not exist in the transmission schedule table cached at the server front end, and feed back the target scheduling information to the target online data producer.

Optionally, the scheduling server is specifically configured to cache the transmission schedule table at a server front end;
the online data producer is configured to send a data scheduling request to the scheduling server when target data needs to be transmitted to the data consumer;
the scheduling server is further configured to look up target scheduling information corresponding to the target data in the transmission scheduling table cached at the server front end, and feed back the target scheduling information to the online data producer; and
the online data producer is configured to transmit the target data according to the target scheduling information.

Optionally, the scheduling server is further configured to:
acquire infrastructure information of a target data producer, when receiving a registration request or a re-online request for the target data producer; and
mark the target data producer as an online data producer and allocate online data consumers during a current period to the target data producer based on the infrastructure information of the target online data producer.

Optionally, the scheduling server is further configured to:
mark a target data producer as a non-online data producer, when a logout request or a sleep request for the target data producer is received, or when a keep-alive message is not received from the target data producer within a preset duration.

Optionally, the scheduling server is further configured to:
acquire infrastructure information of a target data consumer, and mark the target data consumer as an online data consumer, when receiving a registration request or a re-online request for the target data consumer;
generate a latest transmission schedule table, according to the infrastructure information of all online data producers and the data production status during the previous period as well as the infrastructure information of all online data consumers and the data consumption status during the previous period
provide the latest transmission schedule table to all online data producers, such that all online data producers perform data transmission based on the latest transmission schedule table.

Optionally, the scheduling server is further configured to:
mark a target data consumer as a non-online data consumer, when a logout request or a sleep request for a target data consumer is received, or when a keep-alive message is not received from the target data consumer within a preset duration;
generate a latest transmission schedule table according to the infrastructure information of all online data producers and the data production status during the previous period, and the infrastructure information of all online data consumers and the data consumption status during the previous period; and
provide the latest transmission schedule table to all online data producers, such that all online data producers perform data transmission based on the latest transmission schedule table.

The beneficial effects brought by the technical solutions provided by the embodiments of the present application are as follows.

In embodiments of the present application, the scheduling server periodically acquires data production status of all online data producers during the previous period and data consumption status of all online data consumers during the previous period; the scheduling server generates a transmission schedule table according to infrastructure information of all online data producers and all online data consumers, as well as data production status and data consumption status; the scheduling server provides the transmission schedule table to all online data producers, such that all online data producers perform data transmission based on the transmission schedule table. As such, the scheduling server is arranged between the data producers and the data consumers, and the scheduling server continuously schedules the data transmission between the data producers and the data consumers according to real-time running status of the data producers and the data consumers and the historical result for transmitting data, such that load balancing can be effectively implemented in the data consumption cluster, and the quality of data processing and the utilization rate of the device resources for the data consumption cluster could be further improved.

### BRIEF DESCRIPTION OF THE DRAWINGS

In order to more clearly illustrate the technical solutions in embodiments of the present application, the drawings used in description of the embodiments will be briefly described below. It is obvious to those skilled in the art that the drawings in the following description only illustrate some embodiments of the present application, and other drawings may be obtained according to these drawings without any creative work.
FIG. 1 is a schematic block diagram of a data transmission scheduling system according to an embodiment of the present application;
FIG. 2 is a flowchart of a data transmission scheduling method according to an embodiment of the present application.

### DETAILED DESCRIPTION

In order to make the objects, technical solutions and advantages of the present application more clear, some embodiments of the present application will be further described in detail below with reference to the accompanying drawings.

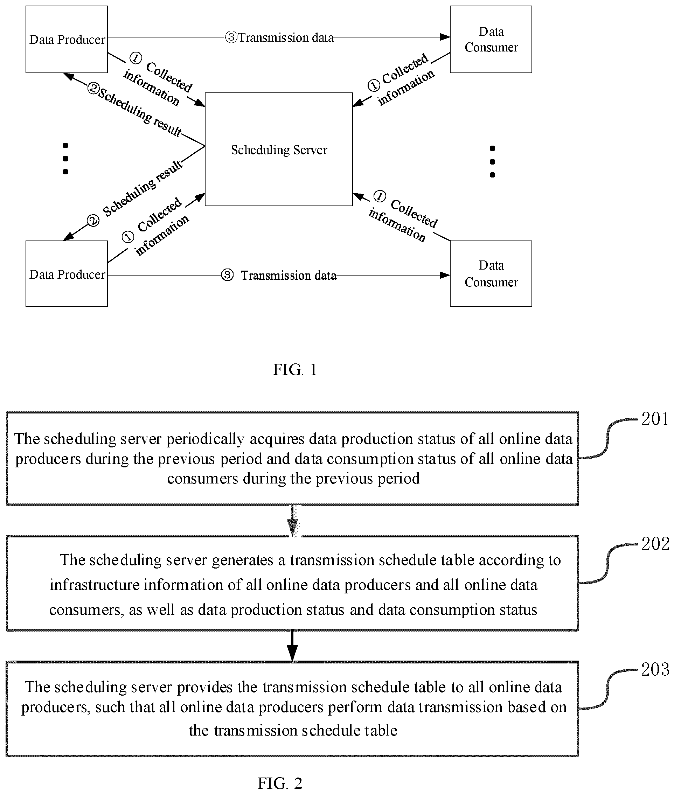

An embodiment of the present application provides a data transmission scheduling method, the method is applied to a data transmission scheduling system, and the data transmission scheduling system comprises at least one scheduling server, a plurality of data producers and data consumers, as shown in FIG. 1. The scheduling server may be a network device for scheduling data transmission between the data producers and the data consumers, specifically, the scheduling server may provide a scheduling result to the data producers in a form of a transmission schedule table, such that the data producers may transmit the generated data to the data consumers based on the transmission schedule table. The data producer may be any network device in a data production cluster that may produce data and has a requirement for data analysis, such as the business server mentioned in the background section, and the data consumer may be a network device in a data consumption cluster that provides data analysis service to the data producer, such as the data analysis device mentioned in the background section. The scheduling server may comprise a processor, a memory, and a transceiver. The processor may be configured to perform processes of data transmission scheduling in the flow described below, the memory may be configured to store data required during the processes as well as the generated data, such as multi-dimensional device information of the data producers and the data consumers; and the transceiver may be configured to receive and send relevant data during the processes, such as a transmission schedule table, data production status, data consumption status, etc. It is worth mentioning that the function of the scheduling server may be implemented by a scheduling cluster composed of a plurality of network devices. In this embodiment, a single scheduling server is taken as an example for illustration, and the scheduling cluster may be similarly implemented.

The processing flow shown in FIG. 2 will be described in details below with reference to specific embodiments, and the description thereof may be as follows:
Step 201: The scheduling server periodically acquires data production status of all online data producers during a previous period and data consumption status of all online data consumers during the previous period.

The data production status may include at least one of a total data amount of various types of data generated during a period, a distribution for generation rate, etc. The data consumption status may include at least one of a total data amount of various types of data received during the period, a distribution for receiving rate, a device load, a percentage of analyzed data, etc.

In implementation, when data produced by the data production cluster have to be effectively and reasonably transmitted to the data consumption cluster through a data transmission scheduling system, the technician may first install a client scheduling program on each of the data producers and data consumers, such that each of the data producers and data consumers may communicate with the scheduling server through the client scheduling program to implement scheduling of data transmission. When providing the data transmission scheduling service, the scheduling server may periodically determine all data producers that are currently online (which may be referred to as online data producers) and data consumers that are currently online (which may be referred to as online data consumers), and then acquire data production status of all online data producers during a previous period and data consumption status of all online data consumers during the previous period. Specifically, the client scheduling program may periodically collect data production status or data consumption status of the device to which it belongs, and then transmit these data to the scheduling server in a form of an HTTP message.

Further, except necessary IP address and information on the network operator, main information that is included in the HTTP message transmitted between the scheduling server and the client scheduling program may be recorded by using a specific message structure; the specific message structure is mainly composed of four sections of contents "A, B, C, D", each of which is a positive integer and has a function different from the others, and different data in the sections have different meanings.

Specifically, with respect to a request type message sent by the client scheduling program to the scheduling server, the specific message structure for the request type message may be illustrated as follows. A is configured to indicate a source that initiates the message, and when A has a value of 1, it indicates that the message is sent by devices other than the scheduling client and data producers/data consumers; when A has a value of 2, it indicates that the message is sent by the scheduling client; and when A has a value of 3, it indicates that the message is sent by a data producer or a data consumer. B is configured to indicate whether the message is sent by a data producer or a data consumer; and when B has a value of 1, it indicates that the message is sent by a data producer; and when B has a value of 2, it indicates that the message is sent by a data consumer. The combination of CD is configured to indicate a message type, when CD has a value of 01, it indicates that the message is a scheduling request; when CD has a value of 02, it indicates that the message is a load reporting message; when CD has a value of 03, it indicates that the message is a registration request for a data producer or a data consumer; when CD has a value of 04, it indicates that the message is a logout request for a data producer or a data consumer; when CD has a value of 05, it indicates that the message is a keep-alive message for a data producer or a data consumer; when CD has a value of 06, it indicates that the message is a sleep request from a data producer or a data consumer; when CD has a value of 07, it indicates that the message is a re-online request of the data producer or the data consumer; when the CD has a value of 08, it indicates that the message is a report message of data production status; and when the CD has a value of 09, it indicates that the message is a report message of data consumption status.

With respect to a return type message sent by the scheduling server to the client scheduling program, a specific message structure of the return type message may be illustrated as follows. A is configured to indicate a response state for a request message, when A has a value of 0, it indicates that the response to the request message is normal; when A has a value of 1, it indicates that there is a possibility that the response to the request message is incorrect; and when A has a value of 2, it indicates that the response to the request message is incorrect. B is configured to indicate a return source of the message, when B has a value of 1, it indicates that the message is returned by a server front end; and when B has a value of 2, it indicates that the message is returned by a server back end. The combination of CD is a specific error code configured to indicate an error type of the request or the response, when CD has a value of 00, it indicates that there is no error; when CD has a value of 01, it indicates that a data producer has been repeatedly registered; when CD has a value of 02, it indicates that a data consumer has been repeatedly registered; when CD has a value of 03, it indicates that the request is timeout; when CD has a value of 04, it indicates that the format of the request message is incorrect; when CD has a value of 05, it indicates that a data consumer is not allocated; and when CD has a value of 06, it indicates that the connection with the server front end is disconnected.

Step 202: The scheduling server generates a transmission schedule table according to infrastructure information of all online data producers and all online data consumers, as well as the data production status and the data consumption status.

The infrastructure information may be information of the data producer or the data consumer that does not change within a short period, such as IP address, information network operator, device registration information of the data producer or the data consumer, etc.

In implementation, at the beginning of each period, the scheduling server may acquire the infrastructure information of all online data producers and all online data consumers, after acquiring data production status of all online data producers during the previous period and data consumption status of all online data consumers during the previous period. The infrastructure information may be reported to the scheduling server when each of the data producers or data consumers registers on the scheduling server side for the first time, and is stored locally by the scheduling server. Then, the scheduling server may generate a transmission schedule table based on a preset scheduling rule, according to the infrastructure information of all online data producers and all online data consumers as well as the data production status and data consumption status acquired in step 201. Specifically, the scheduling rule herein may be as follows: first, the online data producers and the online data consumers are grouped according to the network operators to which they belong, and if the network operators are not the same, a mainstream network provider is obtained according to geographical locations; and then, with respect to the online data producers and the online data consumers that belong to the same network operator or have the same geographical location, the online data producers may be ranked according to data production amount during the previous period, and the online data consumers may be ranked according to the data consumption ability thereof (specifically, rated loads of the data consumers may be referred to herein); and finally, the ranked online data producers and the online data consumers may be paired, that is, the online data consumer with high data consumption capability may correspond to the online data producer with a high data production amount. It is worth mentioning that since the number of online data producers is much larger than that of online data consumers, one online data consumer may be paired with multiple online data producers when pairing. The above scheduling rule is illustrated as follows: if there are 12 online data producers A1, A2, ..., A12, and the data production amounts of the 12 online data producers have the following relationship: A1>A2>...>A12; and there are 3 online data consumers B1, B2, B3, and the data consumption abilities of the 3 online data consumers have the following relationship: B1>B2>B3, the 12 online data producers may be paired with 3 online data consumers sequentially; in this case, the pairing result may be that A1-A4 correspond to B1, A5-A8 correspond to B2, and A9-A12 correspond to B3; or A1, A4, A7 and A10 correspond to B1, A2, A5, A8 and All correspond to B2, and A3, A6, A9 and A12 correspond to B3.

Step 203: The scheduling server provides the transmission schedule table to all online data producers, such that all online data producers perform data transmission based on the transmission schedule table.

In implementation, after generating the transmission schedule table at the beginning of the period, the scheduling server may provide the transmission schedule table to all online data producers, such that all online data producers may perform data transmission during the current period based on the transmission schedule table. It will be understood that an online data producer herein refers to a data producer that is in an online state at the beginning of the period, and accordingly, the online data producers at the beginning of different periods are different.

Optionally, the scheduling server providing the transmission schedule table to the online data producer may be implemented in at least the following manners: sending the transmission schedule table to each of the online data producers for storage, and storing the transmission schedule table at the server front end for query by the online data producers, and correspondingly, the processing of step 203 may be performed in manners as follows:

Manner 1: with respect to a target online data producer, the scheduling server sends the transmission schedule table to the target online data producer for storage; and when target data need to be transmitted to the data consumer, the target online data producer transmits the target data according to the stored transmission schedule table.

In implementation, taking the target online data producer as an example, the scheduling server may send the transmission schedule table to the target online data producer after generating the transmission schedule table, and the target online data producer may store the transmission schedule table in cache space corresponding to the client scheduling program after receiving the transmission schedule table. As such, when the target data needs to be transmitted to the data consumer, the target online data producer may acquire the transmission schedule table stored in the cache space and then transmit the target data according to the transmission schedule table. It is not difficult to be conceived that if a transmission schedule table has already been stored in the cache space corresponding to the client scheduling program, the target online producer may overwrite the stored transmission schedule table when storing a new transmission schedule table.

Optionally, while the online data producers store the transmission schedule table, the scheduling server may also cache the transmission schedule table at the server front end for query by the online data producer, and the corresponding processing may be as follows: the scheduling server caches the transmission schedule table at the server front end; if scheduling information corresponding to the target data does not exist in the transmission schedule table stored by the target online data producer, the target online data producer sends a data scheduling request to the scheduling server; the scheduling server looks up target scheduling information corresponding to the target data in the transmission schedule table cached at the server front end, and feeds back the target scheduling information to the data producer; and the target online data producer transmits the target data according to the target scheduling information.

In implementation, the scheduling server may also cache the transmission schedule table at the server front end while transmitting the transmission schedule table to all online data producers. As such, taking the target online data producer as an example, when target data need to be transmitted to the data consumer, if the scheduling information corresponding to the target data does not exist in the transmission schedule table stored by the target online data producer, the target online data producer may send a data scheduling request to the scheduling server. After receiving the data scheduling request, the scheduling server may read the transmission scheduling table cached at the server front end and look up the target scheduling information corresponding to the target data in the transmission scheduling table, and then the scheduling server may feed back the target scheduling information to the target online data producer. After receiving the target scheduling information, the target online data producer may transmit the target data according to the target scheduling information. Based on the above processing, in case that there is an error in the transmission schedule table stored by the online data producer, the data scheduling request may be quickly responded by using the transmission schedule table cached at the server front end of the scheduling server, thereby effectively improving the scheduling efficiency of the data transmission scheduling system.

Optionally, if scheduling information cannot be determined by the transmission schedule table, the scheduling server may perform real-time scheduling, and the corresponding processing may be as follows: if the scheduling information corresponding to the target data does not exist in the transmission scheduling table cached at the server front end, the scheduling server generates the target scheduling information corresponding to the target data based on the infrastructure information of the target online data producer, and feeds back the target scheduling information to the target online data producer.

In implementation, after the target online data producer sends the data scheduling request to the scheduling server, if the scheduling server cannot obtain the scheduling information corresponding to the target data by looking up it in the transmission scheduling table cached by the server front end, the scheduling server may firstly acquire the infrastructure information of the target online data producer, generates the target scheduling information corresponding to the target data based on the infrastructure information, and then feed back the target scheduling information to the target online data producer. It should be noted that the scheduling rule herein may be the same as the scheduling rule in step 202. When generating the target scheduling information, a default value or an average value of all online data producers during the current period may be selected for the lacking information data. Specifically, if the data production amount of the target online data producer during the previous period could be acquired, the ranking of the target online data producer in all online data producers may be determined according to the data production amount, then a target online data consumer corresponding to the ranking is selected from all online data consumers, and then the data produced by the target online data producer can be transmitted to the target online data consumer. If the data production amount of the target online data producer during the previous period cannot be acquired, a default value or an average data production amount of all online data producers during the previous period can be used as the data production amount of the target online data producer during the previous period, then the processing to determine the target online data consumer is subsequently performed.

Manner 2: the scheduling server caches the transmission schedule table at the server front end; with respect to any one of the online data producers, when the target data needs to be transmitted to the data consumer, the online data producer sends a data scheduling request to the scheduling server; the scheduling server looks up the target scheduling information corresponding to the target data in the transmission schedule table cached at the server front end, and feeds back the target scheduling information to the online data producer; and the online data producer transmits the target data according to the target scheduling information.

In implementation, after generating the transmission schedule table, the scheduling server may caches the transmission schedule table at the server front end. As such, with respect to any one of the online data producers, when the target data needs to be transmitted to a data consumer, the online data producer may send a data scheduling request to the scheduling server. After receiving the data scheduling request, the scheduling server may read the transmission scheduling table cached at the server front end, and look up the target scheduling information corresponding to the target data in the transmission scheduling table, and then the scheduling server may feed back the target scheduling information to the online data producer. After receiving the target scheduling information, the online data producer may transmit the target data according to the target scheduling information.

Optionally, when the status of the data producers and the data consumers are changed, the scheduling server may perform different processing for the changes as follows:
First, if the data producer is in an online state: when receiving a registration request or a re-online request for the target data producer, the scheduling server acquires the infrastructure information of the target data producer; the scheduling server marks the target data producer as the online data producer, and allocates online data consumers during the current period to the target data producer based on the infrastructure information of the target online data producer.

In implementation, taking the target data producer as an example, when the target data producer goes online for the first time or restores to the online state, the technician may send a registration request or a re-online request for the target data producer to the scheduling server through the target data producer or other devices. As such, when receiving the above registration request or re-online request, the scheduling server may acquire the infrastructure information of the target data producer, then mark the target data producer as an online data producer, and allocate the online data consumers during the current period to the target data producer based on the infrastructure information of the target online data producer. It should be noted that the scheduling rule herein may be the same as the scheduling rule in step 202. When generating the target scheduling information, a default value or an average value of all online data producers during the current period may be selected for the lacking information or data. In addition, the above infrastructure information may be carried in the registration request or the re-online request, or may be actively acquired by the scheduling server from the target data producer after receiving the registration request or the re-online request.

Second, if the data producer is in an offline state: when a logout request or a sleep request for the target data producer is received, or when a keep-alive message is not received from the target data producer within a preset duration, the scheduling server marks the target data producer as a non-online data producer.

In implementation, taking the target data producer as an example, on one hand, when the target data producer goes offline or goes to sleep, the technician may send the logout request or sleep request for the target data producer to the scheduling server through the target data producer or other device. As such, when receiving the above logout request or sleep request, the scheduling server may mark the target data producer as a non-online data producer. On the other hand, when the data producer provides the service on line normally, a keep-alive message may be periodically sent to the scheduling server, and if the scheduling server does not receive the keep-alive message sent by the target data producer within the preset duration, the target data producer may be considered as in an offline state, so the scheduling server may mark the target data producer as a non-online data producer.

Third, if the data consumer is in an online state: when receiving a registration request or a re-online request for the target data consumer, the scheduling server acquires the infrastructure information of the target data consumer, and marks the target data consumer as an online data consumer; the scheduling server generates a latest transmission schedule table according to the infrastructure information of all online data producers and the data production status during the previous period, and the infrastructure information of all online data consumers and the data consumption status during the previous period; the scheduling server provides the latest transmission schedule table to all online data producers, such that all online data producers perform data transmission based on the latest transmission schedule table.

In implementation, taking the target data consumer as an example, when the target data consumer goes online for the first time or restores to the online state, the technician may send the registration request or the re-online request for the target data consumer to the scheduling server through the target data consumer or other device. As such, when receiving the above registration request or re-online request, the scheduling server may acquire the infrastructure information of the target data consumer, mark the target data consumer as an online data consumer, and then generate the latest transmission schedule table according to the infrastructure information of all online data producers and the data production status during the previous period and the infrastructure information of all online data consumers and the data consumption status during the previous period. Further, the scheduling server may provide the latest transmission schedule table to all online data producers, such that all online data producers perform data transmission based on the latest transmission schedule table. The above infrastructure information may be carried in the registration request or the re-online request, or may be actively acquired by the scheduling server from the target data consumer after receiving the registration request or the re-online request.

Fourth, if the data consumer is in an offline state: when a logout request or a sleep request for the target data consumer is received, or when a keep-alive message is not received from the target data consumer within a preset duration, the scheduling server marks the target data consumer as a non-online data consumer; the scheduling server generates the latest transmission schedule table according to the infrastructure information of all online data producers and the data production status during the previous period, and the infrastructure information of all online data consumers and the data consumption status during the previous period; the scheduling server provides the latest transmission schedule table to all online data producers, such that all online data producers perform data transmission based on the latest transmission schedule table.

In implementation, taking the target data consumer as an example, on one hand, when the target data consumer goes offline or goes to sleep, the technician may send the logout request or the sleep request for the target data consumer to the scheduling server through the target data consumer or other device. As such, when receiving the above logout request or sleep request, the scheduling server may mark the target data consumer as a non-online data consumer. On the other hand, the data consumer may periodically send the keep-alive message to the scheduling server while normally providing the service on line, and if the scheduling server does not receive the keep-alive message sent by the target data consumer within the preset duration, the target data consumer may be considered as in an offline state, so the scheduling server may mark the target data consumer as a non-online data consumer. Then, the scheduling server may mark the target data consumer as an online data consumer, and generate the latest transmission schedule table according to the infrastructure information of all online data producers and the data production status during the previous period, and the infrastructure information of all online data consumers and the data consumption status during the previous period. Further, the scheduling server may provide the latest transmission schedule table to all online data producers, such that all online data producers perform data transmission based on the latest transmission schedule table.

In embodiments of the present application, the scheduling server periodically acquires data production status of all online data producers during the previous period and data consumption status of all online data consumers during the previous period; the scheduling server generates a transmission schedule table according to infrastructure information of all online data producers and all online data consumers, as well as the data production status and the data consumption status; the scheduling server provides the transmission schedule table to all online data producers, such that all online data producers perform data transmission based on the transmission schedule table. As such, a scheduling server is arranged between the data producer and the data consumer, and the scheduling server continuously schedules the data transmission between the data producers and the data consumers according to real-time running status of the data producers and the data consumers and the historical transmission result for data, such that effective load balancing may be implemented in a data consumption cluster, and the data processing quality and device resource utilization rate of the data consumption cluster may be further improved.

Based on the same technical idea, the embodiment of the present application further provides a data transmission scheduling system, and the system comprises at least one scheduling server, a plurality of data producers and data consumers, wherein the scheduling server is configured to:
periodically acquire data production status of all online data producers during a previous period and data consumption status of all online data consumers during the previous period;
generate a transmission schedule table according to infrastructure information of all online data producers and all online data consumers as well as the data production status and the data consumption status; and
provide the transmission schedule table to all online data producers, such that all online data producers perform data transmission based on the transmission schedule table.

Optionally, the scheduling server is specifically configured to send the transmission schedule table to a target online data producer for storage; and
the target online data producer is configured to transmit target data according to the stored transmission schedule table, when the target data needs to be transmitted to the data consumer.

Optionally, the scheduling server is further configured to cache the transmission schedule table at a server front end.
the target online data producer is further configured to send a data scheduling request to the scheduling server, if scheduling information corresponding to the target data does not exist in the transmission schedule table stored by the target online data producer;
the scheduling server is further configured to look up target scheduling information corresponding to the target data in the transmission schedule table cached at the server front end, and feed back the target scheduling information to the data producer; and
the target online data producer is further configured to transmit the target data according to the target scheduling information.

Optionally, the scheduling server is further configured to:
generate the target scheduling information corresponding to the target data based on the infrastructure information of the target online data producer, if the scheduling information corresponding to the target data does not exist in the transmission schedule table cached at the server front end, and feed back the target scheduling information to the target online data producer.

Optionally, the scheduling server is specifically configured to cache the transmission schedule table at a server front end;
the online data producer is configured to send a data scheduling request to the scheduling server when target data needs to be transmitted to the data consumer;
the scheduling server is further configured to look up target scheduling information corresponding to the target data in the transmission scheduling table cached at the server front end, and feed back the target scheduling information to the online data producer; and
the online data producer is configured to transmit the target data according to the target scheduling information.

Optionally, the scheduling server is further configured to:
acquire infrastructure information of a target data producer, when receiving a registration request or a re-online request for the target data producer;
mark the target data producer as an online data producer, and allocate the online data consumers during the current period to the target data producer based on the infrastructure information of the target online data producer.

Optionally, the scheduling server is further configured to:
mark a target data producer as a non-online data producer, when a logout request or a sleep request for the target data producer is received, or a keep-alive message is not received from the target data producer within a preset duration.

Optionally, the scheduling server is further configured to:
acquire infrastructure information of a target data consumer and mark the target data consumer as an online data consumer, when receiving a registration request or a re-online request for the target data consumer;
generate a latest transmission schedule table according to the infrastructure information of all online data producers and the data production status during the previous period as well as the infrastructure information of all online data consumers and the data consumption status during the previous period;
provide the latest transmission schedule table to all online data producers, such that all online data producers perform data transmission based on the latest transmission schedule table.

Optionally, the scheduling server is further configured to:
mark a target data consumer as a non-online data consumer, when a logout request or a sleep request for the target data consumer is received, or when a keep-alive message is not received from the target data consumer within a preset duration;
generate a latest transmission schedule table, according to the infrastructure information of all online data producers and the data production status during the previous period as well as the infrastructure information of all online data consumers and the data consumption status during the previous period; and
provide the latest transmission schedule table to all online data producers, such that all online data producers perform data transmission based on the latest transmission schedule table.

In embodiments of the present application, the scheduling server periodically acquires data production status of all online data producers during the previous period and data consumption status of all online data consumers during the previous period; the scheduling server generates a transmission schedule table according to infrastructure information of all online data producers and all online data consumers as well as data production status and data consumption status; the scheduling server provides the transmission schedule table to all online data producers, such that all online data producers perform data transmission based on the transmission schedule table. As such, the scheduling server is arranged between the data producers and the data consumers, and the scheduling server continuously schedules the data transmission between the data producers and the data consumers according to real-time running status of the data producers and the data consumers and the historical result for transmitting data, such that load balancing can be effectively implemented in the data consumption cluster, and the quality of data processing and the utilization rate of the device resources for the data consumption cluster could be further improved.

It should be understood by those skilled in the art that all or part of steps for implementing the above embodiments may be achieved by hardware, or may be achieved by instructing related hardware through programs, and the programs may be stored in a computer readable storage medium. The storage medium mentioned above may be a read only memory, a magnetic disk or an optical disk, etc.

The above is only preferred embodiments of the present application, and is not intended to limit the application. Any modification, equivalent substitution, improvement, etc. that fall within the spirit and principle of the present application shall be considered as falling within the scope of the present application.

## Claims

1. A data transmission scheduling method applied to a data transmission scheduling system, wherein, the data transmission scheduling system comprises at least one scheduling server, a plurality of data producers and data consumers, the method comprising:
periodically acquiring, by the scheduling server, data production status of all online data producers during a previous period and data consumption status of all online data consumers during the previous period;
generating, by the scheduling server, a transmission schedule table according to infrastructure information of all online data producers and all online data consumers as well as the data production status and the data consumption status; and
providing, by the scheduling server, the transmission schedule table to all online data producers, such that all online data producers perform data transmission based on the transmission schedule table.

2. The method according to claim 1, wherein the providing, by the scheduling server, the transmission schedule table to all online data producers, such that all online data producers perform data transmission based on the transmission schedule table comprises:
with respect to a target online data producer, sending, by the scheduling server, the transmission schedule table to the target online data producer for storage; and
when target data needs to be transmitted to a data consumer, transmitting, by the target online data producer, the target data according to the stored transmission schedule table.

3. The method according to claim 2, further comprising:
caching, by the scheduling server, the transmission schedule table at a server front end;
if scheduling information corresponding to the target data does not exist in the transmission schedule table stored by the target online data producer, sending, by the target online data producer, a data scheduling request to the scheduling server;
looking up target scheduling information corresponding to the target data in the transmission schedule table cached at the server front end and feeding back the target scheduling information to the data producer, by the scheduling server; and
transmitting, by the target online data producer, the target data according to the target scheduling information.

4. The method according to claim 3, further comprising performing the following step after the target online data producer sending a data scheduling request to the scheduling server:
if the scheduling information corresponding to the target data does not exist in the transmission schedule table cached at the server front end, generating target scheduling information corresponding to the target data based on the infrastructure information of the target online data producer and feeding back the target scheduling information to the target online data producer, by the scheduling server.

5. The method according to claim 1, wherein, providing, by the scheduling server, the transmission schedule table to all online data producers, such that all online data producers perform data transmission based on the transmission schedule table comprises:
caching, by the scheduling server, the transmission schedule table at a server front end;
with respect to any one of the online data producers, sending, by the online data producer, a data scheduling request to the scheduling server, when target data needs to be transmitted to a data consumer;
looking up target scheduling information corresponding to the target data in the transmission schedule table cached at the server front end and feeding back the target scheduling information to the online data producer, by the scheduling server; and
transmitting, by the online data producer, the target data according to the target scheduling information.

6. The method according to any of claims 1-5, further comprising:
when receiving a registration request or a re-online request for a target data producer, acquiring, by the scheduling server, infrastructure information of the target data producer; and
marking the target data producer as an online data producer and allocating online data consumers during a current period to the target data producer based on the infrastructure information of the target online data producer, by the scheduling server.

7. The method according to any one of claims 1-5, further comprising:
when a logout request or a sleep request for a target data producer is received, or when a keep-alive message is not received from the target data producer within a preset duration, marking, by the scheduling server, the target data producer as a non-online data producer.

8. The method according to any one of claims 1-5, further comprising:
when receiving a registration request or a re-online request for a target data consumer, acquiring infrastructure information of the target data consumer and marking the target data consumer as an online data consumer, by the scheduling server;
generating, by the scheduling server, a latest transmission schedule table, according to the infrastructure information of all online data producers and the data production status during the previous period as well as the infrastructure information of all online data consumers and the data consumption status during the previous period; and
providing, by the scheduling server, the latest transmission schedule table to all online data producers, such that all online data producers perform data transmission based on the latest transmission schedule table.

9. The method according to any one of claims 1-5, further comprising:
when a logout request or a sleep request for a target data consumer is received, or when a keep-alive message is not received from the target data consumer within a preset duration, marking, by the scheduling server, the target data consumer as a non-online data consumer;
generating, by the scheduling server, a latest transmission schedule table, according to the infrastructure information of all online data producers and the data production status during the previous period as well as the infrastructure information of all online data consumers and the data consumption status during the previous period; and
providing, by the scheduling server, the latest transmission schedule table to all online data producers, such that all online data producers perform data transmission based on the latest transmission schedule table.

10. A data transmission scheduling system comprising at least one scheduling server, a plurality of data producers and data consumers, wherein the scheduling server is configured to:
periodically acquire data production status of all online data producers during a previous period and data consumption status of all online data consumers during the previous period;
generate a transmission schedule table according to infrastructure information of all online data producers and all online data consumers as well as the data production status and the data consumption status; and
provide the transmission schedule table to all online data producers, such that all online data producers perform data transmission based on the transmission schedule table.

11. The system according to claim 10, wherein
the scheduling server is specifically configured to send the transmission schedule table to a target online data producer for storage; and
the target online data producer is configured to transmit target data according to the stored transmission schedule table, when the target data needs to be transmitted to a data consumer.

12. The system according to claim 11, wherein
the scheduling server is further configured to cache the transmission schedule table at a server front end;
the target online data producer is further configured to send a data scheduling request to the scheduling server, if scheduling information corresponding to the target data does not exist in the transmission schedule table stored by the target online data producer;
the scheduling server is further configured to look up target scheduling information corresponding to the target data in the transmission scheduling table cached at the server front end, and feed back the target scheduling information to the data producer; and
the target online data producer is further configured to transmit the target data according to the target scheduling information.

13. The system according to claim 12, wherein the scheduling server is further configured to:
generate target scheduling information corresponding to the target data based on the infrastructure information of the target online data producer, if the scheduling information corresponding to the target data does not exist in the transmission schedule table cached at the server front end, and feed back the target scheduling information to the target online data producer.

14. The system according to claim 10, wherein,
the scheduling server is specifically configured to cache the transmission schedule table at a server front end;
the online data producer is configured to send a data scheduling request to the scheduling server when target data needs to be transmitted to the data consumer;
the scheduling server is further configured to look up target scheduling information corresponding to the target data in the transmission scheduling table cached at the server front end, and feed back the target scheduling information to the online data producer; and
the online data producer is configured to transmit the target data according to the target scheduling information.
